# EUROPEAN PATENT SPECIFICATION

(11) **EP 3 374 750 B1**
(45) Date of publication and mention of the grant of the patent: **26.02.2020**
(21) Application number: 16810012.1
(22) Date of filing: 11.11.2016
(51) Int. Cl.: G01M 99/00

(54) **METHOD AND DEVICE FOR INSPECTING THE PASSAGE SYSTEMS OF MACHINE COMPONENTS WITH CAVITIES, ESPECIALLY CASTINGS, CYLINDER HEADS**
VERFAHREN UND VORRICHTUNG ZUR INSPEKTION DER DURCHGANGSSYSTEME VON MASCHINENKOMPONENTEN MIT HOHLRÄUMEN, INSBESONDERE GUSSSTÜCKE, ZYLINDERKÖPFE
PROCÉDÉ ET DISPOSITIF D'INSPECTION DES SYSTÈMES DE PASSAGE DE COMPOSANTS DE MACHINE AVEC CAVITÉS, NOTAMMENT PRODUITS MOULÉS, CULASSES

(30) Priority: 13.11.2015 HU 1500539
(43) Date of publication of application: 19.09.2018
(73) Proprietor: Falcon-Vision Zrt., 1043 Budapest (HU)
(72) Inventor: KERÉNYI, István, 1046 Budapest (HU)
(74) Representative: Ronaszéki, Tibor
(86) International application number: PCT/HU2016/000070
(87) International publication number: WO 2017/081500

(56) References cited:
- GB-A- 2 275 341
- US-A- 5 272 911
- US-A1- 2008 239 303

## Description

Industry uses metal castings in numerous fields, which may have various types of passages. These are created using so-called cores ("sand cores"), the metal is poured around these, and then removed afterwards using vibration, for example. A typical area of application is in vehicle engine production, where in the cases of engine blocks and cylinder heads these passages are essential for water-cooling and for the transporting of lubricant. Concealed faults in these passages may lead to engine damage, therefore during production their 100% inspection has become important.

Currently there are numerous solutions for inspection based on numerous physical principles.

Patent number US8238635 relates to a method in which images are produced of the inspected work piece using X-rays, then these are analysed in comparison to reference images. Its disadvantage is the relatively high acquisition cost of the device required for the inspection, and the deviations of the image obtained are difficult to transform into a numerical evaluation of the reduction in the flow conductivity of the given section.

The most widespread method at present is based on the use of light (mostly infrared light). In the case of cylinder heads the passage system is usually established with several passages leading to the surface. According to the method presented in disclosure document number EP2548007 light-emitting and detecting elements are coupled to the individual passage pairs, and conclusions may be drawn about the intactness of the passage from the intensity of the measured light.

The disadvantage of the method is that not all passage systems can be inspected in this way, because circuitous systems exist through which light does not pass. In addition the expected resistance to flow of any partial obstruction is difficult to quantify, because the light-reflecting properties of the walls vary, the degree to which a given cross-section is "filled with light" is incalculably inhomogeneous. Due to this the grading of a restriction found there does not only depend on its dimensions but also on its position and has minimal correlation to flow resistance. A further problem is that the passage pairs are frequently linked to parallel branches, which cannot always be selectively inspected (by directing the beam). In this way, for example, the light transmittance of an especially shiny passage is able to compensate for an obstruction in a passage running parallel to it.

The common disadvantage of the above methods is they do not inspect the flow directly, or inspect for any obstructions, instead they draw conclusions about the flow conductivity of the passages by determining the value of an indirect parameter.

In the case of the solution disclosed in disclosure document number EP0595480, the inspection relates directly to the determination of flow resistance. The essence of the method is that air is pumped through the selected passage pairs at a pressure maintained at a fixed level and then the amount of air passing through is measured (litre/sec). Any quantitative deviation signals a restriction or blockage. Its advantage is that as compared to the previous methods it provides more practical information, as a fluid is flowing in the passage system during the inspection (not light), and the flow behaviour of gases in the case of low pressure difference is similar to that of liquids. Its disadvantage is that the problem mentioned previously in connection with parallel linked passages still exists, i.e. if the normal distribution of a passage with good flow conductivity (M³/s.Pa) is greater than the average flow conductivity of a side branch running parallel to it then a blockage in the latter cannot be clearly determined. Another device is known from GB 2275341.

The objective of the invention is to overcome the above disadvantages, i.e. to create an inspection method and device suitable for inspecting parallel connected passages with different cross-sections, different lengths and different geometric shapes.

We recognised that if two mediums are used with different physical parameters as the inspection medium instead of using one medium that are fed into the input with a single sharp change or alternating rhythmically, i.e. they are fed into the input at separate times, then the change over time of the percentage composition of the medium flowing from the casting separately characterises the individual passages, then conclusions may be drawn about the compliance of the individual passages.

Therefore the solution according to the invention is a method for inspecting the passage systems of machine components with cavities, especially castings, cylinder heads, for inspecting appropriate flow conductivity, where the passage system comprises at least one inlet opening leading to the surface of the machine component, at least one outlet opening leading to the surface of the machine component, and at least two parallel connected passages connecting the inlet opening and the outlet opening, characterised by that a first medium is fed into the passage system through the inlet opening of the passage system, then, with a sharp change a second medium with different physical properties is fed into the passage system, and at the outlet opening of the passage system the change over time of the composition of the medium flowing out is determined, then the composition-time function obtained in this way is compared to the standard composition-time function of a perfect machine component.

In the case of a preferable embodiment of the method according to the invention the first medium is air.

In the case of another preferable embodiment of the method according to the invention the second medium is humid air.

In the case of yet another preferable embodiment the second medium is a gas with a density different to that of air.

In the case of still another preferable embodiment the second medium is a gas with different optical properties to those of air.

In the case of another preferable embodiment several medium changes are applied one after the other.

In the case of still another preferable embodiment the second medium is fed into the inlet in the form of impulses.

The solution according to the invention is a device for inspecting the passage systems of machine components with cavities, especially castings, cylinder heads, for inspecting appropriate flow conductivity, where the passage system comprises at least one inlet opening leading to the surface of the machine component, at least one outlet opening leading to the surface of the machine component, and at least two parallel connected passages connecting the inlet opening and the outlet opening, and the device has a medium feed unit connected to the inlet opening of the passage system with a gas-tight connection and an assessment unit connected to the outlet opening of the passage system, and a medium transport unit ensuring the flow of the medium between the inlet opening and the outlet opening of the passage system, the medium feed unit has an input and an output, as well as a medium switching element between the input and the output, and the assessment unit comprises a measuring device suitable for determining the composition of the medium flowing through it and an assessment device in a data communication connection with it.

In the case of a preferable embodiment of the device according to the invention, the medium switching element is a remote controlled shuttle valve.

In the case of another preferable embodiment of the device according to the invention, the medium switching element is an intermittent dispenser.

In the case of a preferable embodiment of the device according to the invention, the measuring device is a fast-reacting hygrometer.

In the case of another preferable embodiment of the device according to the invention, the measuring device is a density meter.

In the case of another preferable embodiment of the device according to the invention, the medium *transport unit* has an *input ventilator in flow connection with the input of* the medium feed unit.

In the case of another preferable embodiment of the device according to the invention, the medium transport unit has a piston in flow connection with the input of the medium feed unit.

In the case of another preferable embodiment of the device according to the invention, the medium transport unit has a suction ventilator in flow connection with the output opening of the medium transport unit.

In the case of a preferable embodiment of the device according to the invention, the assessment device is a computer.

In the following the method and device according to the invention is presented in detail with reference to drawings, wherein:
- Figure 1: is a schematic drawing presenting the principle of operation of the method according to the invention,
- Figure 2: presents the composition-time function characteristic of a faulty machine component, with continuous input pressure, in an ideal case,
- Figure 3: presents the composition-time function characteristic of a faulty machine component, with continuous input flow rate, in an ideal case,
- Figure 4: presents a composition-time function according to real flow conditions,
- Figure 5: presents a composition-time function characteristic in the case of impulse medium switching,
- Figure 6: presents a preferable embodiment of the device according to the invention,
- Figure 7: present a partially cutaway view of a fast-reacting hygrometer,
- Figure 8: presents a partially cutaway view of a preferable embodiment of the assessment device,
- Figure 9: presents a partially cutaway top view of another preferable embodiment of the assessment unit,

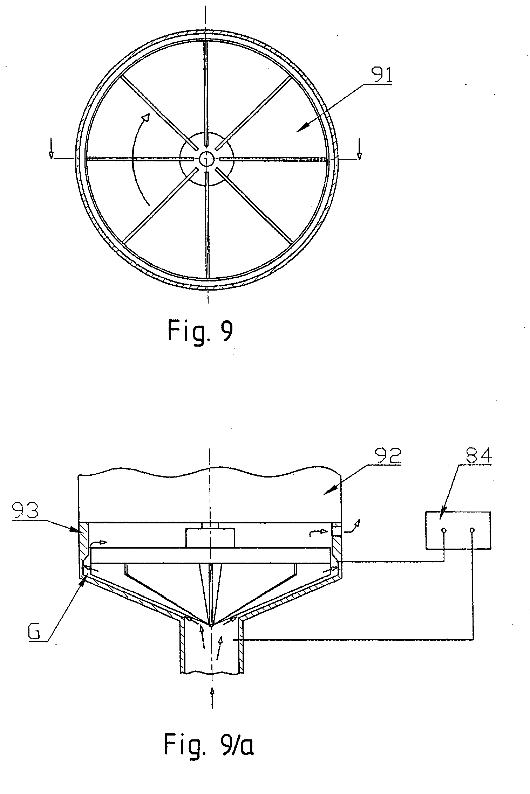

- Figure 9/a: presents the A-A cross-section of the assessment unit according to figure 9,

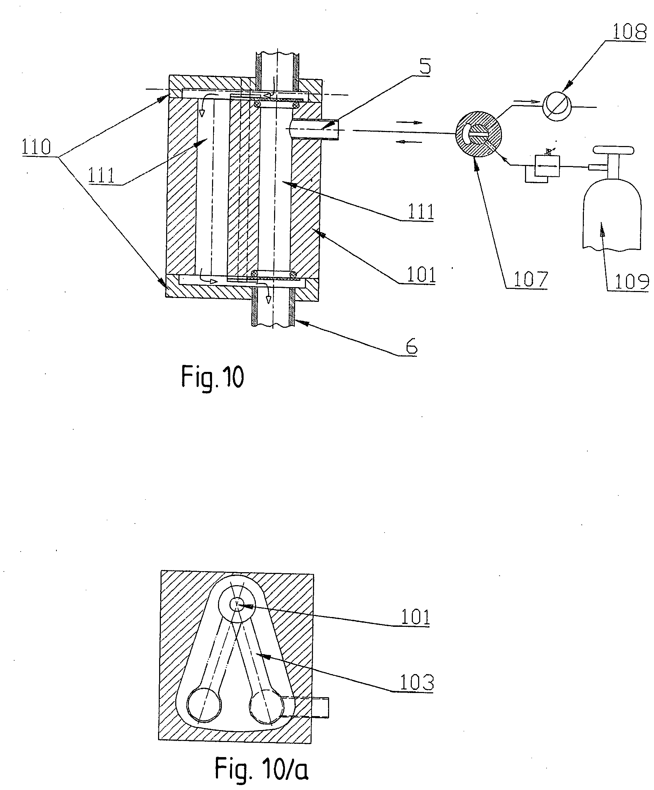

- Figure 10: presents a partially cutaway side view of a preferable embodiment of the medium switching element,
- Figure 10/a: presents the A-A cross-section of the medium switching element according to figure 10,

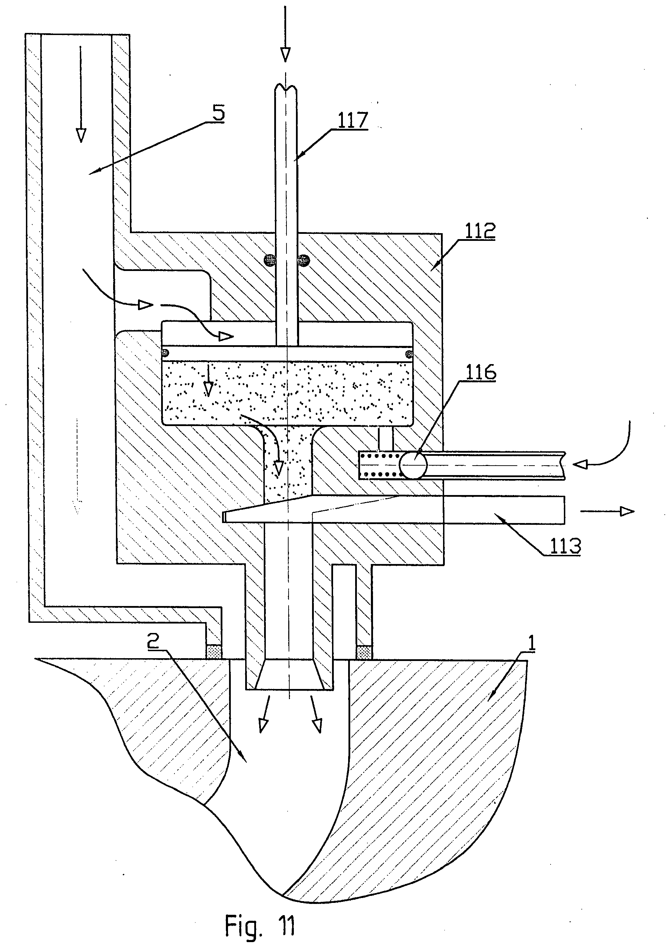

- Figure 11: presents a partially cutaway view of another preferable embodiment of the medium switching element,

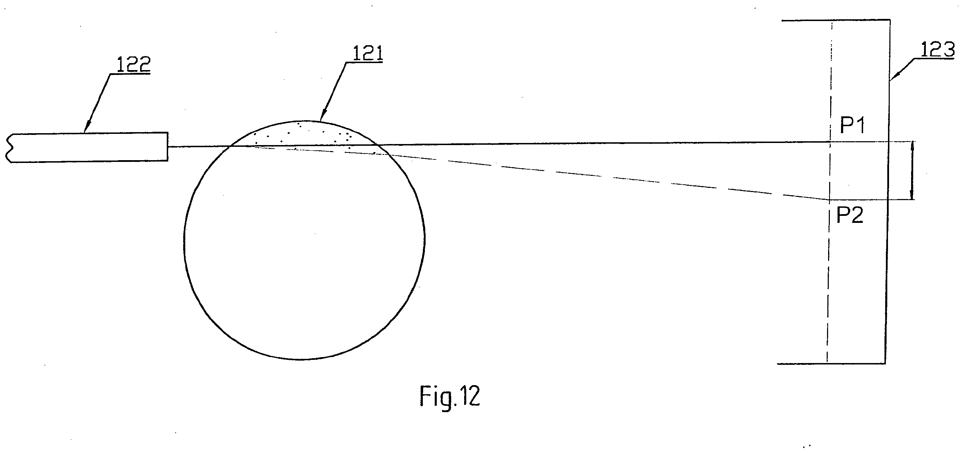

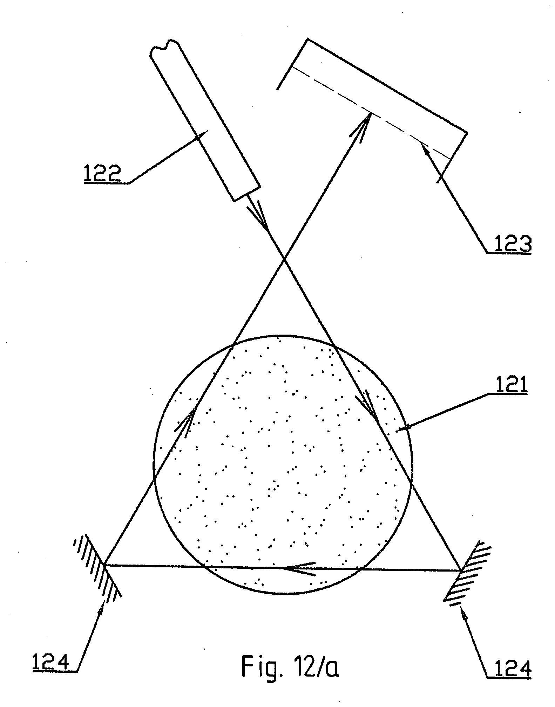

- Figure 12: presents a schematic arrangement of a preferable embodiment of the measuring device,
- Figure 12/a: presents a schematic arrangement of another preferable embodiment of the measuring device,

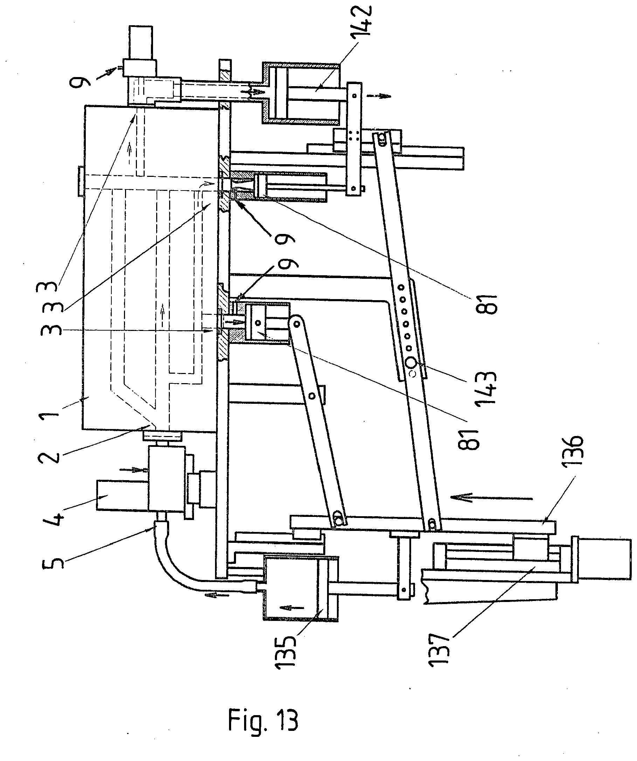

- Figure 13: presents another preferable embodiment of the device according to the invention.

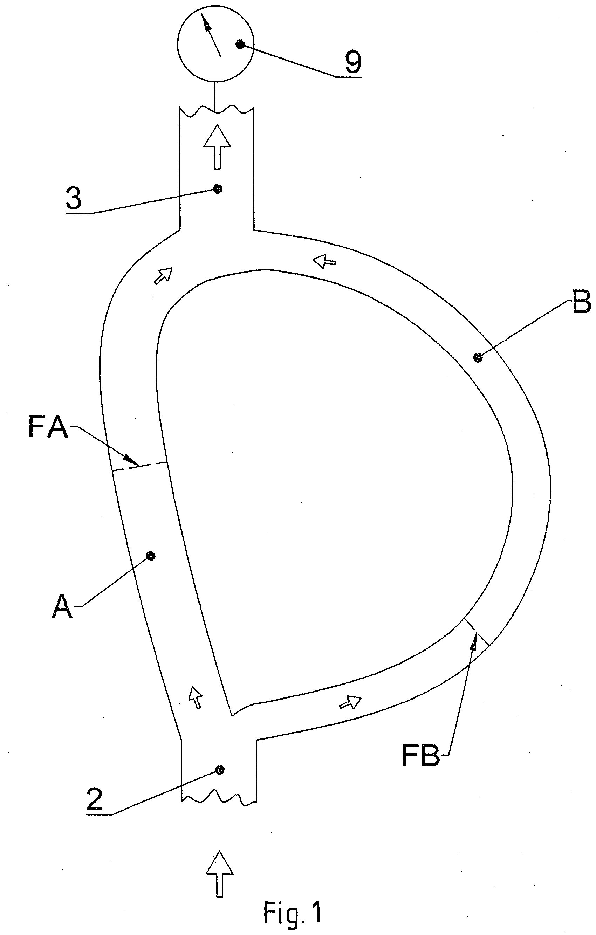

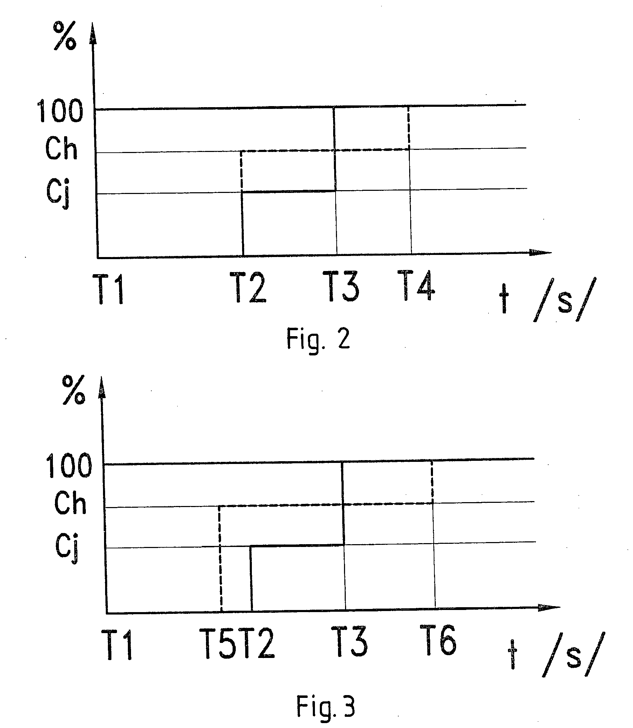

In figure 1 two passages, passage A and passage B with differing lengths and cross-sections are located between the inlet opening 2 and the outlet opening 3 of the passage system of the machine component 1. In a single pipe, a sharp medium switch at the inlet also causes a sharp change at the outlet, with a delay complying with the "journey time". If, however, the passage system is the bifurcated passage system according to figure 1, the front of the change progresses in these two directions. Figure 2 shows that at time T1 the medium switch implemented at the inlet opening 2 of the passage system progresses after the branch in the two passages independently of each other, which front FA indicates in passage A and front FB indicates in passage B. After a certain amount of delay as compared to time T1 the front FA reaches the outlet opening 3 of the passage system at time T2. At this time, however the front FB had not passed through passage B, therefore a mixture of the second medium arriving from passage A and the first medium arriving from passage B reaches the outlet opening 3 of the passage system and so reaches the measuring device 9 suitable for determining the composition of the medium, where the concentration value Cj is determined. At a further moment in time T3, however, the front FB travelling through passage B also reaches the outlet opening 3 of the passage system, i.e. the second medium arrives from both passage A and passage B at the outlet opening 3 of the passage system and so 100% second medium will be flowing through the measuring device 9. The assessment device 10, which is preferably a computer, determines the composition-time function drawn with a continuous line in figure 2 on the basis of the data arriving from the measuring device 9, which complies with the standard composition-time function characteristic of a perfect machine component.

In the case passage B is partially blocked, under continuous inlet pressure the front FA also reaches the outlet opening 3 of the passage system at time T2. However, due to the restriction the flow slows down in passage B, therefore, on the one part, the front FB reaches the outlet opening 3 of the passage system at a later time T4, and, on the other part, as during a unit of time less of the first medium passes along passage B, the measuring device 9 determines a higher Ch concentration value with respect to the second medium between times T2 and T4. The assessment device 10 determines the composition-time function drawn with a dotted line in figure 2 on the basis of the data arriving from the measuring device 9.

The measurement may also be performed under the condition of a continuous flow rate, which in the case of the partial blockage of passage B results in the composition-time function indicated in figure 3 with a dotted line. In this case the flow necessarily speeds up in passage A, as a consequence of which front FA reaches the outlet opening 3 of the passage system at a sooner time T5. Naturally, also in this case, the changed flow ratios also result in a higher concentration of the second medium in the time interval between times T5 and T6.

From the above it can be seen that the displacement of the times T2 and T3, as well as the change in the concentration value Cj suggest an irregularity in the passage system. During the measurement the times T4, T5, T6 as well as the concentration value Ch can be quantified, compared to the times T2 and T3 and concentration value Cj of the standard function, the reduction in flow conductivity can be demonstrated.

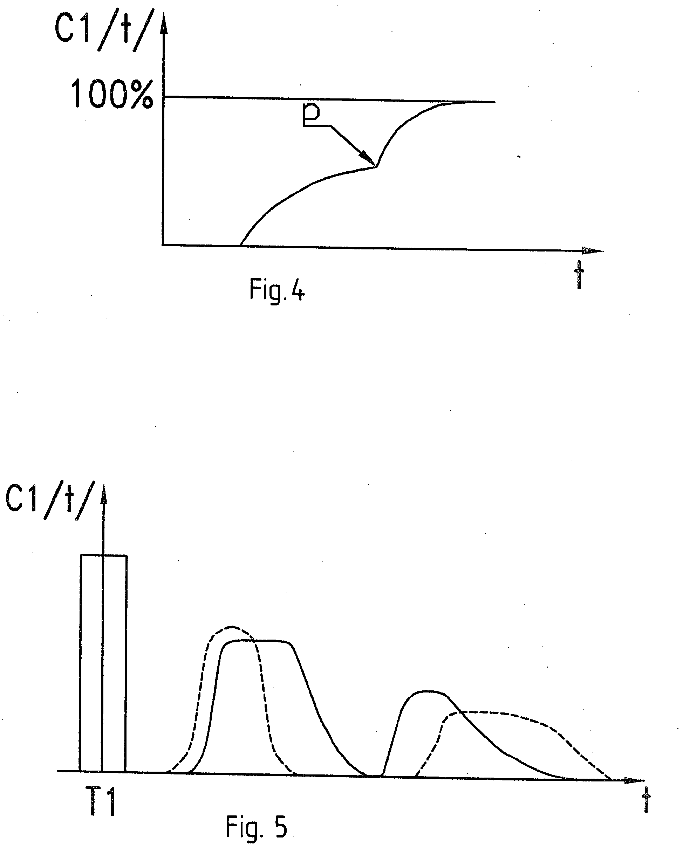

The theoretical explanation given up to this point relates to an ideal case, i.e. it would be true for flow without friction and turbulence. In reality, however, any front started with a sharp change of medium is distorted into an elongated cap, due to the existence of the unavoidable boundary layer at the walls. Therefore, the standard function mapping the passage system of a perfect machine component in the case of a passage system with a given geometry is as shown in figure 4. However, the break point P seen in figure 4 continues to clearly characterise the given passage system, and if it is lacking this indicates a large blockage in passage B. Nevertheless, the existence of the break point P excludes the complete blockage of passage B, irrespective of whether the parallel passage A is of an above average size. The latter, in the case of a simple flow measurement, would obscure the fault.

The situation is made even more complex by the fact that there are passage sections between the inlet opening 2 visible in figure 1 and the branching of the passages A and B, furthermore, between the point where the passages A and B meet and the outlet opening 3, the resistance of which also has an effect on the established composition-time function.

It is important to note that in reality, due to the normal spread of the castings, the standard function cannot be drawn with a sharp line, instead it is defined as a band, which can be drawn, for example, from the measurement of the passage systems of a large number of castings of the same type. In this case the break point P must fall within this band in order to receive a "good" grading.

It may occur that in the case the passage system has a certain geometry, the passages A and B have the same characteristics, i.e. when inspecting a faultless machine component the break point P. does not appear. In this case the appearance of the break point P refers to a deficiency in the flow conductivity of the passage system.

Naturally, in the case of more than two parallel passages there are more break points P and the joint presence of each of them having the appropriate value represents the flow conductivity of the passage system being faultless.

The inspection of the passage system of the machine component 1 does not only have to be performed with a permanent change of medium. The concentration-time function drawn in figure 5 with a continuous line is obtained by continuously injecting air as the first medium into the inlet of the passage system, and then injecting helium, for example, in an impulse-like way as the second medium. In such a case in practice the change of medium is created by injecting a few cm³ of "helium spurts" into the continuously flowing air at time T1. In such a case the composition-time function displayed with the dotted line may suggest a fault in the flow conductivity of the passage system.

For reasons of cost-effectiveness a further possibility is offered by a dry air - wet air combination. In this case as the first medium air with a low humidity content is continuously injected into the inlet opening 2 of the passage system, then with a sharp change of medium the second medium is injected, which in the present case is humid air, not yet saturated at the temperature of the production plant or castings. The measuring device 9 continuously measures the humidity of the air arriving at the outlet opening 3 of the passage system, and the data arriving from the measuring device 9 are processed by the assessment device 10 in the way presented above.

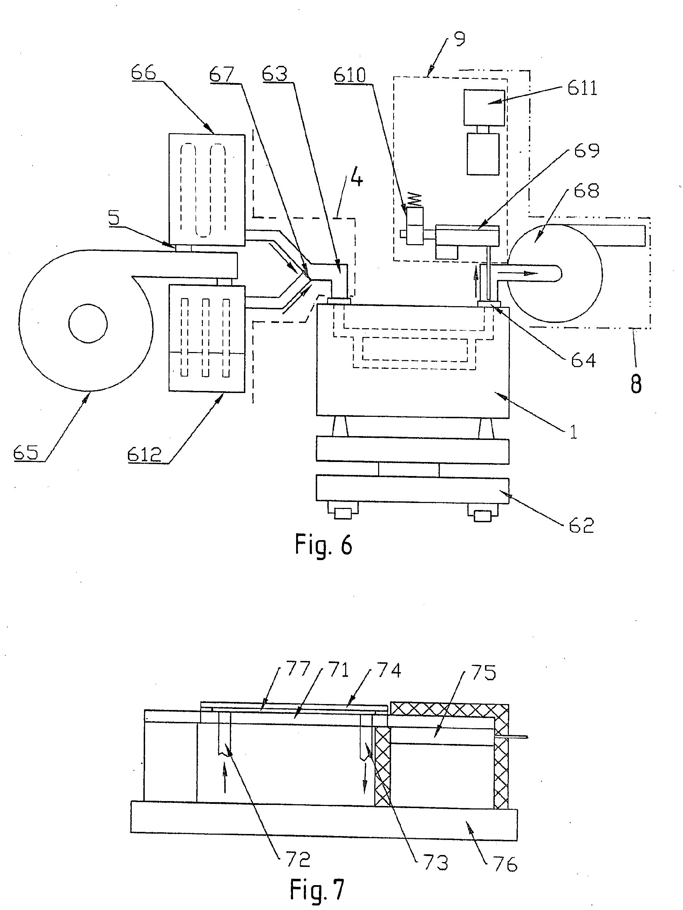

A preferable embodiment of the device according to the invention is presented in figure 6. In the case of this embodiment air is used as the first medium and humid air is used as the second medium. The overpressure in the medium feed unit 4 is provided by the input ventilator 65 of the medium transport unit, which transports the environmental air into the air dryer 66 and the air-humidifier 612. In the present case the medium switching element 7 is a controlled shuttle valve 67. The first input 5 of the medium feed unit 4 is connected to the air dryer 66 and the second input 5 is connected to the air-humidifier 612. The measuring device 9 of the assessment unit 8 in this embodiment comprises a fast-reacting hygrometer 69 and a camera 611. The camera 611 is connected to the assessment device 10, which is not depicted here and which is preferably a computer. The input of the medium flowing through the passage system into the fast-reacting hygrometer 69 is ensured by a controlled injector pump 610. In the interest of achieving ideal flow conditions at the outlet opening 3 of the passage system, a suction ventilator 68 may also be connected to the medium transport unit, as required.

When inspecting the machine component 1 first the inlet opening 2 and outlet opening 3 of the passage system of the machine component 1 is connected to the medium feed unit 4 and the assessment unit 8 with the help of a transport-lifting device 62. The input ventilator 65 of the medium transport unit provides the flow input, which in the initial situation according to the figure blows dry air through the air dryer 66 and the shuttle valve 67 into the passage system. The suction ventilator 68 of the medium transport unit connected to the outlet opening 3 of the passage system sucks out a significant proportion of this through the close targeted passages of the machine component 1. The more distant passages are left out of the measurement, as disturbing factors, because on the one part the pressure differences in the flow system for one longitudinal unit are minimal (as long as the injection-suction conditions have been correctly chosen), and on the other part because as a result of this the associated travelling times are long, and are omitted from the time of the inspection. A part of the air that has passed through the passage system passes through the fast-reacting hygrometer 69 as a consequence of the controlled injector pump 610.

The substantial part of the measurement starts when the shuttle valve 67 switches as compared to that depicted and the flow continues through the air-humidifier 612, at this time the suction of the controlled injector pump 610 starts and due to this the medium that has passed through the passage system of the machine component 1 flows through the fast-reacting hygrometer 69 and the camera 611 starts recording. After processing the camera's 611 signal, the assessment device 10 determines an air humidity-time function approximately equivalent to that in figure 4. The air humidity progresses towards a certain final balance status, which does not necessarily comply with the concentration produced by the air-humidifier 612, as medium may also arrive through the passages leading to the close openings of the passage system. However, if these passages are flooded with air with a known humidity, this will not damage repeatability. In the interest of improving selectivity the appropriate desired flow may be ensured with suction, blockage or blowing in the other openings of the passage system.

In order to keep cycle time, for example, the measurement may be duplicated many times and operated in synch, furthermore, it may be necessary to inspect individual passage systems using several, different inlet openings 2 and outlet openings 3, naturally each of these will have a different "compliant function".

A preferable embodiment of the fast-reacting hygrometer 69 is presented in figure 7. The value-indicating plate 71 during operation has an increasingly lower temperature progressing from left to right (constant function over time). The temperature function according to location is developed so that the cooling element 75 continuously dissipates heat from the right end of the value-indicating plate 71, and the left end of this, however, is approximately at the ambient temperature. The continuous heat flow creates an approximately linear function (prismatic cross-section, minimal supplementary heat flow). It is preferable to use a well known Peltier element as a cooling element, the warm side of which transmits the heat to the base body 76, which is fitted with an air cooling device. Before a new measurement is started any accumulated water must be removed. This may be achieved with a short intensive stream of hot air, which only affects the temperature of the surface of the value-indicating plate 71 to a small extent and regains its original temperature distribution within a short period of time. Above the upper shiny surface of the value-indicating plate 71 there is a channel 77 delimited by a glass plate 74 enclosed from the sides and above, which is connected to the input tube 72 and the output tube 73.

During the measurement the air that has passed through the passage system of the machine component 1 passes through the input tube 72 into the channel 77, from where it passes over the value-indicating plate 71 and leaves through the output tube 73. The shiny surface of the value-indicating plate 71 is increasingly colder in the travelling direction of the air. The location where the particles of the air meet the dew point according to the humidity content is where precipitation starts and it can be easily seen that the rest of the part of the shiny surface of the value-indicating plate 71 becomes dull. As the humidity content of the incoming air increases, the dull section increases in size in the direction of the flow. Under appropriate lighting conditions the camera 611 detects this and the assessment device 10 is able to continuously assign a value. On completion of the measurement the image of the function according to figure 4 of the inspected passage system is mapped in the assessment device 10.

The disadvantage of the hygrometer according to figure 7 is that in practice it is only able to provide a reliable result in the case of an increase in humidity content. A reduction in the humidity of the air flowing over it would be indicated by a shortening of the dull section, which represents a drying process. This drying process is significantly slower than the formation of the dull section in case of the growing humidity. Therefore, using the arrangement according to figure 7 impulse-like humidity content changes cannot be indicated without error. A solution to the above problem may be if instead of using a value-indicating plate 71 a value-indicating cylinder is used, for example, the temperature distribution of which changes in the direction of its axis. The channel 77 according to figure 7 runs above the side of the cylinder at a small distance from it. During measurement the cylinder rotates and the precipitation occurring draws a geometrically appearing humidity content function on the side of the cylinder, which the camera 611 transforms into an electronic signal. The electronic signal may be processed in the assessment device 10 and compared to the standard function.

For fluid mechanics reasons it is preferable to use high-speed, turbulent flow when performing the measurement, which involves a fast composition change. In the case of certain gas-pair combinations the measurement of the ratio of the composition, using known devices, is relatively slow and unsatisfactory. In order to overcome this problem a fast sampling - storage device may be used, which quickly takes separate samples one after the other from the medium arriving though the outlet opening 3 of the passage system (e.g. using a rotary valve), then following this these are individually taken through the assessment device, in this way ensuring appropriate time durations for the performance of the measurement. As a result of the series of measurement a line composition-time function of the process is obtained, which may be compared to the standard function recorded in a similar way.

In the case of another embodiment of the device according to the invention, the first medium is air and the second medium is a gas with a density different to that of air. In this case air is injected into the first input 5 of the medium feed unit 4 and a gas with a significantly lower or greater density than that of air is injected into the second input 5. The medium feed unit 4 is preferably constructed according to figure 10. In figure 10 it maybe seen that the housing 101 of the medium feed unit 4 has two bores 111 passing through it. The ends of the bores 111 open out into a hollow common space closed with a cover 110. One of the inputs 5 of the medium feed unit 4 is connected to this space on the one side of the bores 111, while the output 6 of the medium feed unit 4 is connected on the other side of the bores 111. In the depicted situation the right-side bore 111 is closed on both ends with a tongue pair 103, which is fixed to the axis 104. In this embodiment the role of the medium switching element 7 is filled by this tongue pair 103. In this way the clean air continuously arriving at the first input 5 of the medium feed unit 4 flows through the left-side bore 111 to the output 6 of the medium feed unit 4. The other, the right-side bore 111 in the present case is filled with gas with a density different to that of air through the second input 5 of the medium feed unit 4 and the three-stage valve 107.

The three-stage valve 107 is also connected to the vacuum pump 108 and gas bottle 109 forming a part of the medium transport unit. Filling takes place by first placing the bore 111 under a vacuum using the vacuum pump 108, then the three-stage valve 107 opens towards the direction of the gas bottle 109, from where gas enters the bore 111 at atmospheric pressure. Following this the three-stage valve 107 switches to closed.

The medium switching element 7 of the medium feed unit 4 performs the medium switching by moving the tongue pair 103 to the dotted line position. In this case the air continuously arriving at the first input 5 of the medium feed unit 4 pushes the gas with a density different to that of air in its way, waiting in the right-side bore through the output 5 of the medium feed unit 4 and the inlet opening 2 of the passage system into the inspected passage system of the machine component 1.

The medium feed unit 4 and its medium switching element 7 may also be realised with the device presented in figure 11. After the tongue of the slide valve 113 has moved the piston 117 moving downwards in the bore of the housing 112 pushes out the second medium that has been previously sucked into the space under it. At the same time the same amount of the continuously arriving first medium, i.e. air flows into the space above the piston 117, as a consequence of which the constant flow rate is ensured through the inlet opening 2 of the passage system of the machine component 1 substantially independently of the injection of the second medium. In the opposite case, for example with the first medium flowing constantly, if the second medium were to be simply blown in a shockwave would be set off in the passage system, which would damage the precision of the measurement as noise.

When refilling the piston 117 moves upwards, the tongue of the slide valve 113 is in closed position, and a new dose of the second medium flows through the input 5 of the medium feed unit 4, then through the non-return valve 116 into the space under the piston 117.

In the interest of achieving optimal conditions, i.e. maximum concentration of the second medium, the flow rate derived from data relating to the surface of the piston and speed is equal to the flow rate of the continuous air feed arriving.

In this embodiment the measuring device 9 of the assessment unit 8 measures the density of the medium leaving the outlet opening 3 of the passage system of the machine component 1. The assessment device 10 determines the composition of the gas flowing through the measuring device 9 from its density, in other words it determines the ratio of the combination of the first and second mediums. The continuous measurement of the density of the medium leaving the outlet opening 3 of the passage system of the machine component 1 may be performed in the simplest way by passing the medium through a restriction at a constant flow rate and then measuring the pressure difference created in the restriction and before it. This arrangement essentially represents the reversed method of flow rate measurement, where the density is known and the pressure difference is a characteristic of the flow rate.

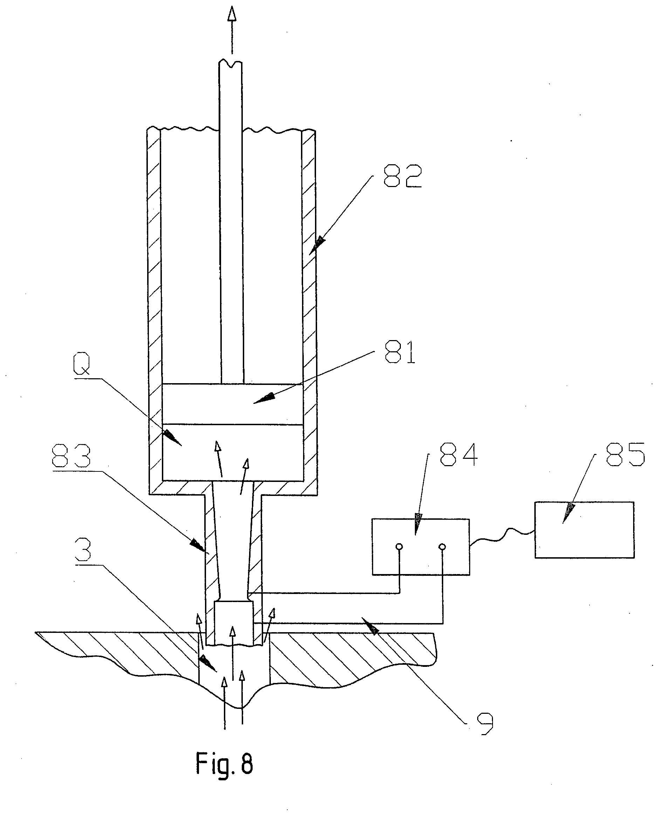

Figure 8 presents a measuring device 9 set up in accordance with the above. The piston 81 of the medium transport unit presented in figure 8 moves at constant speed in the cylinder 82, thereby ensuring a constant air flow of the medium in the restriction, which in this case is a venturi tube 83. "Constant air flow" naturally with good approximation is only true if the pressure difference created is small, and the buffer space Q is small. According to known fluid mechanics correlations, the pressure difference created is proportionate to the density. This is measured by a manometer 84 (pressure transmitter), the measurement values are recorded by the digital storage unit 85 forming a part of the assessment device 10. In accordance with that presented previously the assessment device 10 compares the values recorded by the digital storage unit 85 with the appropriate values of the standard function.

The air pump comprising the piston 81 and the cylinder 82 may be replaced by other pumps, such as a rotary vane pump, water ring pump or centrifugal pump, etc. In these cases the damaging buffer space Q may be reduced. Even air transportation is important, in cases to the contrary pulsation noise places a burden on the recorded information.

A device for creating a density-proportionate pressure difference may also be created using the centrifugal ventilator presented in figure 9. In this case the vane wheel 91 is evenly rotated by the motor 92. The medium flowing between the vanes arrives in the collection space G with extra pressure proportional to its density, then leaves through the gap between the vane wheel 91 and the housing 93 against the choking of this gap. In this case also the pressure difference is measured with a manometer 84 and the values determined are processed in accordance with that presented above. In the case of this embodiment, it is essentially the hydrostatic pressure of the flowing medium that is being measured, which is created in the centrifugal field characterised by great centripetal acceleration.

The medium feed unit 4 presented in figures 10 and 11 may also accordingly be used for injecting mediums with differing optical properties. If the optical property referred to is the refractive index of the medium, the measuring device 9 of the assessment unit 8 may be preferably constructed in accordance with the arrangement sketched out in figure 12.

In the arrangement presented in figure 12 the medium flowing out of the outlet opening 3 of the passage system of the machine component 1 is guided through a round cross-section free-flow nozzle 121. The light of the laser 122 is projected through the medium leaving the exit opening of the nozzle 121 - in the eccentric arrangement according to the figure - onto the CCD sensor 123. If the first medium is air, the light beam is not diffracted, so the CCD sensor 123 detects the light beam emitted by the laser 122 at point P1. If the second medium has a higher refractive index than air, when it appears the gas column exiting the nozzle 121 behaves as a cylindrical lens, so the light of the laser 122 reaches the surface of the CCD sensor 123 at point P2. The position of point P2 changes in harmony with the changes in the refractive index of the gas column exiting the nozzle 121, so from the electronic signal arriving from the CCD sensor 123, the assessment device 10 is able to determine the momentary refractive index of the flowing medium, then after processing these values in the way presented above, it is able to provide data on the flow conductivity of the passage system of the machine component 1.

The optical determination of the density of the medium leaving the outlet opening 3 of the examined passage system may also be realised with an arrangement in the case of which, in the place of the free-flow nozzle, the medium leaving the outlet opening 3 is guided through a cylindrical tube with a transparent wall and the light beam emitted by the laser 122 is projected through this tube, in an arrangement similar to the above, onto the CCD sensor 123. Naturally, in this case the optical properties of the wall of the transparent tube must also be taken into consideration when assessing the measurement.

A further developed version of the measuring device according to figure 12 may be seen in figure 12/a. In the case of this embodiment the light of the laser 122 passes through the examined medium several times with the help of 124 mirrors, in this way the change in refractive index may be determined with greater sensitivity.

The method and device according to the invention may also be realised so that the assessment unit 8 has several measuring devices 9. In this case several outlet openings 3 of the passage system of the machine component 1 are used for the measurement, everyone of which is brought into simultaneous fluid mechanics connection with an individual measuring device 9 of the assessment unit 8. Figure 13 presents such a device set up according to a preferable embodiment for measurement based on the first medium and the second medium having different densities. In the case of this embodiment in addition to the piston 135 connected to the input of the medium feed unit 4, it also contains pistons 81 connected to the measuring devices 9 and other pistons 142 connected to the outlet opening 3 of the passage system.

Via the medium feed unit 4 the piston 135 ensures the medium feed for the passage system of the machine component 1, via its inlet opening 2, while the pistons 81 and 142 ensure a flow of the appropriate distribution and rate (in the present case suction in harmony with injection). The harmony between the injection and suction in ensured by a lever mechanism 136 propelled by a motor-drive linear slide 137. This lever mechanism 136 is in positive mechanical connection with, on the first part, the piston 135 connected to the input 5 of the medium feed unit 4, and, on the second part, with the pistons 81 connected to the measuring devices 9 of the assessment unit 8 according to figure 8. The proportional nature of the individual motions and speeds are given by the lever lengths individually dimensioned for the passage system of the machine component 1 and by the location of the pivot point 1.43. The assessment unit 8 of the device visible in figure 13 also has a centrifugal measuring device 9 presented in figure 9, through which the medium that has passed through the passage system of the machine component 1 flows at a relatively large flow rate as a consequence of the suction effect of the piston 142.

In the case of the arrangement presented in figure 14 the inspection of the passage system of the machine component 1 is realised by moving the linear slide 137 upwards. In unison with this, due to the piston 135 the flow of the first medium starts into the medium feed unit 4, and then through the measuring devices 9 as a result of the suction effect of the pistons 81 and 142 exerted on the outlet openings 3 of the passage system of the machine component 1.

By simultaneously measuring the composition of the medium flowing out of several outlet openings 3, i.e. the course over time of the progress through the passage system of the change implemented at the inlet opening 2, a much more detailed picture is obtained about the flow conductivity of the individual passages of the passage system.

There are significant differences between the inspected machine components 1, with regards to the number and location of the inlet openings 2 and outlet openings 3 that may be used for the inspection. There may also be significant differences in connection with the inspection conditions. The aforementioned embodiments of the method and device according to the invention are now presented adapted to a number of typical, basic cases from the point of view of practical implementation, without limiting the invention to these preferable embodiments. Naturally, as a result of the structure of the machine component 1 and the inspection conditions preferable embodiments different to those above may be conceived that, however, fall within the scope of protection of the invention. Therefore, for example, the medium feed unit 4 may be realised in several ways in the interest of two mediums with different physical properties being inputted into the passage system of the inspected machine component 1 through the inlet opening 2 separately at different point in time. The most obvious solution is if the medium switching element 7 is essentially a shuttle valve. In this case when the second medium appears at the inlet opening 2 of the passage system the flow of the first medium essentially stops. All of the presented preferable embodiments relate to such an arrangement. However, the medium switching element 7 of the medium feed unit 4 may also be set up so that it ensures the intermittent or constant inputting of the second medium while the first medium is flowing constantly. In this case, the medium switching element 7 may also be a dosing valve and its operation has no direct effect on the flow of the first medium. With regard to these cases in the presentation of the invention medium change means the start or the end of the inputting of the second medium at the inlet and is not to be interpreted as a restriction affecting the presence of the first medium at the inlet.

From the point of view of the operation of the invention, it is also not necessary for the first and second mediums to be inputted at the same inlet opening 2 of the passage system of the machine component 1. In the case of a special geometrical arrangement of the passage system, injecting the second medium via an inlet opening 2 different to where the first medium is injected may provide more precise results.

From the above it may be concluded that the arrangement of the medium transport unit implementing the medium flow required for the inspection, both with respect to its structural elements and their locations, may vary according to the flow conditions required by the various measuring arrangements. In a given case the forced flow does not only have to be performed by the ventilator, piston or pressurised gas bottle presented as examples, but by any known device suitable for creating a pressure difference and flow. In the same way it is not necessary for the structural elements of the medium transport unit creating the medium flow only connecting to the inlet opening 2 and the outlet opening 3 of the passage system via the medium feed unit 4, or via the measuring device 9 of the assessment unit 8. A passage system arrangement may also occur where the optimal flow conditions required for the measurement make such medium input at the inlet opening 2 and medium output at the outlet opening 3 necessary that is not directly linked to the measuring process, for example, in the interest of avoiding a buffer effect.

The precise detecting of the change of medium fundamentally determines the precision of the measurement. Therefore, it is preferable to select mediums that differ as much as possible in terms of the measured physical property. Therefore, for example, in the case of density-based measurement, very good results can be expected from the helium-carbon dioxide gas pair. The geometry of the passage system of the inspected machine component 1 must also be taken into consideration when selecting the gas pairs. It is conceivable that a physical property difference that is sufficient for inspecting a simpler passage system does not ensure the necessary measurement precision in the case of a more complex passage system.

A further aspect to be taken into consideration when selecting the mediums used for the inspection is the cost-effectiveness of the measurement, and another important factor is the impact the mediums have on the environment. It must also be taken into consideration that in the case of most of the preferable embodiments of the method significantly more of the first medium is used than of the second medium. With respect to all these factors it is preferable to select environmental air as the first medium, which may be used directly after determining or, if necessary, setting the physical parameters relevant form the point of view of the measurement. According to experience most machine components can be inspected with the use of environmental air as the first medium, this is why air was used as the first medium when presenting the preferable embodiments and their operation.

However, this does not mean that the invention is limited to this medium or even to gases. The passage systems of certain machine components 1, such a cylinder heads, are also subjected to a leak tightness test, which is performed in a wet environment. As it is justified to perform the flow conductivity test and the leak tightness test one after the other, preferable at one location, it may occur that the inspection according to the invention of the passage system of the machine component 1 may be carried out in the simplest way with the use of water as the first medium, which is otherwise available at the inspection location. In the case of such an embodiment, the second medium may be dyed water, for example, or a liquid with density different to that of water.

It must be noted that the inlet opening 2 and the outlet opening 3 of the passage system of the inspected machine component 1 are not necessarily the same as the openings used for the inputting and outputting of the work medium used during the normal operation of the machine component 1. In this way, for example, it may occur that the structural element designated as the inlet opening 2 in the invention fills the role of outlet pipe-end during the normal operation of the machine component 1. Another case may also occur in which an inlet opening 2 and outlet opening 3 are established specifically for the purpose of inspecting the passage system that have no role during normal operation, these are sealed off following the inspection of the machine component 1 and before the machine component 1 is installed.

### List of references

- 1: machine component
- 2: inlet opening
- 3: outlet opening
- 4: feed unit
- 5: input
- 6: medium feed unit
- 7: medium switching element
- 8: assessment unit
- 9: measuring device
- 10: assessment device
- 62: transport-lifting device
- 65: input ventilator
- 66: air dryer
- 67: shuttle valve
- 68: suction ventilator
- 69: fast-reacting hygrometer
- 610: injector pump
- 611: camera
- 612: air-humidifier
- 71: value-indicating plate
- 72: input tube
- 73: output tube
- 74: glass plate
- 75: cooling element
- 76: base body
- 77: channel
- 81: piston
- 82: cylinder
- 83: venturi tube
- 84: manometer
- 85: digital storage unit
- 91: vane wheel
- 92: motor
- 93: housing
- 101: housing
- 103: tongue pair
- 104: axis
- 107: three-stage valve
- 108: vacuum pump
- 109: gas bottle
- 110: cover
- 111: bore
- 112: housing
- 113: slide valve
- 116: non-return valve
- 117: piston
- 121: nozzle
- 122: laser
- 123: CCD sensor
- 124: mirror
- 135: piston
- 136: lever mechanism
- 137: linear slide
- 142: pistons
- 143: pivot point
- "A": passage
- "B": passage
- "Ch": concentration value
- "Cj": concentration value
- "FA": front
- "FB": front
- "G": collection space
- "P": break point
- "P1": point
- "P2": point
- "Q": buffer space
- "T1": time
- "T2": time
- "T3": time
- "T4": time
- "T5": time
- "T6": time

## Claims

1. Method for inspecting the passage systems of machine components with cavities, especially castings, cylinder heads, for inspecting appropriate flow conductivity, where the passage system comprises at least one inlet opening (2) leading to the surface of the machine component, at least one outlet opening (3) leading to the surface of the machine component, and at least two parallel connected passages (A, B) connecting the inlet opening (2) and the outlet opening (3), **characterised by** that a first medium is fed into the passage system through the inlet opening (2) of the passage system, then, with a sharp change a second medium with different physical properties is fed into the passage system, and at the outlet opening (3) of the passage system the change over time of the composition of the medium flowing out is determined, then the composition-time function obtained in this way is compared to the standard composition-time function of a perfect machine component.

2. The method according to claim 1, **characterised by** that in the case of a preferable embodiment of the method according to the invention the first medium is air.

3. The method according to claim 2, **characterised by** that the second medium is humid air.

4. The method according to claim 2, **characterised by** that the second medium is a gas with a density different to that of air.

5. The method according to claim 2, **characterised by** that the second medium is a gas with different optical properties to those of air.

6. The method according to any of claims 1-5, **characterised by** that several medium changes are applied one after the other.

7. The method according to claim 6, **characterised by** that the second medium is fed into the inlet in the form of impulses.

8. Device for inspecting the passage systems of machine components (1) with cavities, especially castings, cylinder heads, for inspecting appropriate flow conductivity, where the passage system comprises at least one inlet opening (2) leading to the surface of the machine component (1), at least one outlet opening (3) leading to the surface of the machine component, and at least two parallel connected passages (A, B) connecting the inlet opening (2) and the outlet opening (3), and the device has a medium feed unit (4) connected to the inlet opening (2) of the passage system with a gas-tight connection and an assessment unit (8) connected to the outlet opening (3) of the passage system, and a medium transport unit ensuring the flow of the medium between the inlet opening (2) and the outlet opening (3) of the passage system, **characterised by** that the medium feed unit (4) has an input (5) and an output (6), as well as a medium switching element (7) between the input (5) and the output (6), the medium switching element (7) configured to change the medium fed into the passage system between a first medium and a second medium with different physical properties than the first one, and the assessment unit (8) comprises a measuring device (9) suitable for determining the composition of the medium flowing through it and an assessment device (10) in a data communication connection with it and configured to determine the change over time of the composition of the medium flowing through the measuring device (9) and to compare the obtained composition-time function with a standard composition-time function of a perfect machine component.

9. The device according to claim 8, **characterised by** that the medium switching element (7) is a remote controlled shuttle valve (67).

10. The device according to claim 8, **characterised by** that the medium switching element (7) is an intermittent dispenser.

11. The device according to any of claims 8-10, **characterised by** that the measuring device (9) is a fast-reacting hygrometer (69).

12. The device according to any of claims 8-10, **characterised by** that the measuring device (9) is a density meter.

13. The device according to any of claims 8-12, **characterised by** that the medium transport unit has an input ventilator (65) in flow connection with the input (5) of the medium feed unit (4).

14. The device according to any of claims 8-12, **characterised by** that the medium transport unit has a piston (135) in flow connection with the input (5) of the medium feed unit (4).

15. The device according to any of claims 8-14, **characterised by** that the medium transport unit has a suction ventilator (68) in flow connection with the output opening (3) of the medium transport unit.

16. The device according to any of claims 8-15, **characterised by** that the assessment device (10) is a computer.

## Patentansprüche

1. Verfahren zur Inspektion der Durchgangssysteme von Maschinenkomponenten mit Hohlräumen, insbesondere Gussstücken, Zylinderköpfen, zur Inspektion einer richtigen Strömungsleitfähigkeit, wobei das Durchgangssystem mindestens eine Einlassöffnung (2) aufweist, die zu der Oberfläche der Maschinenkomponente führt, mindestens eine Auslassöffnung (3), die zu der Oberfläche der Maschinenkomponente führt, sowie mindestens zwei parallele verbundene Durchgänge (A, B), die die Einlassöffnung (2) und die Auslassöffnung (3) verbinden, **dadurch gekennzeichnet, dass** ein erstes Medium durch die Einlassöffnung (2) des Durchgangssystems in das Durchgangssystem eingespeist wird, dass dann mit einer scharfen Veränderung ein zweites Medium mit anderen physikalischen Eigenschaften in das Durchgangssystem eingespeist wird, und dass an der Auslassöffnung (3) des Durchgangssystems die Veränderung der Zusammensetzung des ausströmenden Mediums über die Zeit ermittelt wird, wobei dann die auf diese Weise erhaltene Zusammensetzung-Zeit-Funktion mit der Standard-Zusammensetzung-Zeit-Funktion einer perfekten Maschinenkomponente verglichen wird.

2. Verfahren nach Anspruch 1, **dadurch gekennzeichnet, dass** in dem Fall einer bevorzugten Ausführungsform des Verfahrens gemäß der Erfindung das erste Medium Luft ist.

3. Verfahren nach Anspruch 2, **dadurch gekennzeichnet, dass** das zweite Medium feuchte Luft ist.

4. Verfahren nach Anspruch 2, **dadurch gekennzeichnet, dass** das zweite Medium ein Gas mit einer Dichte ist, die sich von derjenigen von Luft unterscheidet.

5. Verfahren nach Anspruch 2, **dadurch gekennzeichnet, dass** das zweite Medium ein Gas mit anderen optischen Eigenschaften als denjenigen von Luft ist.

6. Verfahren nach einem der Ansprüche 1-5, **dadurch gekennzeichnet, dass** mehrere Veränderungen des Mediums nacheinander angewendet werden.

7. Verfahren nach Anspruch 6, **dadurch gekennzeichnet, dass** das zweite Medium in den Einlass in der Form von Impulsen eingespeist wird.

8. Vorrichtung zur Inspektion der Durchgangssysteme von Maschinenkomponenten (1) mit Hohlräumen, insbesondere Gussstücken, Zylinderköpfen, zur Inspektion einer richtigen Strömungsleitfähigkeit, wobei das Durchgangssystem mindestens eine Einlassöffnung (2) aufweist, die zu der Oberfläche der Maschinenkomponente (1) führt, mindestens eine Auslassöffnung (3), die zu der Oberfläche der Maschinenkomponente führt, sowie mindestens zwei parallele verbundene Durchgänge (A, B), die die Einlassöffnung (2) und die Auslassöffnung (3) verbinden, und wobei die Vorrichtung eine Mediumzuführeinheit (4) aufweist, die mit einer gasdichten Verbindung mit der Einlassöffnung (2) des Durchgangssystems verbunden ist, sowie eine Beurteilungseinheit (8), die mit der Auslassöffnung (3) des Durchgangssystems verbunden ist, und eine Mediumtransporteinheit, die die Strömung des Mediums zwischen der Einlassöffnung (2) und der Auslassöffnung (3) des Durchgangssystems sicherstellt, **dadurch gekennzeichnet, dass** die Mediumzuführeinheit (4) einen Eingang (5) und einen Ausgang (6) aufweist sowie ein Mediumschaltelement (7) zwischen dem Eingang (5) und dem Ausgang (6), wobei das Mediumschaltelement (7) dafür ausgebildet ist, das in das Durchgangssystem eingespeiste Medium zwischen einem ersten Medium und einem zweiten Medium, das andere physikalische Eigenschaften als das erste Medium aufweist, zu ändern, und wobei die Beurteilungseinheit (8) eine Messeinrichtung (9) umfasst, die dafür geeignet ist, die Zusammensetzung des durch sie hindurchströmenden Mediums zu bestimmen, sowie eine Beurteilungseinrichtung (10) in einer Datenkommunikationsverbindung mit ihr und die dafür ausgebildet ist, die Veränderung der Zusammensetzung des durch die Messeinrichtung (9) strömenden Mediums über die Zeit zu ermitteln und die erhaltene Zusammensetzung-Zeit-Funktion mit einer Standard-Zusammensetzung-Zeit-Funktion einer perfekten Maschinenkomponente zu vergleichen.

9. Vorrichtung nach Anspruch 8, **dadurch gekennzeichnet, dass** das Mediumschaltelement (7) ein ferngesteuertes Wechselventil (67) ist.

10. Vorrichtung nach Anspruch 8, **dadurch gekennzeichnet, dass** das Mediumschaltelement (7) eine intermittierende Abgabeeinrichtung ist.

11. Vorrichtung nach einem der Ansprüche 8-10, **dadurch gekennzeichnet, dass** die Messeinrichtung (9) ein schnell reagierendes Hygrometer (69) ist.

12. Vorrichtung nach einem der Ansprüche 8-10, **dadurch gekennzeichnet, dass** die Messeinrichtung (9) eine Dichtemesseinrichtung ist.

13. Vorrichtung nach einem der Ansprüche 8-12, **dadurch gekennzeichnet, dass** die Mediumtransporteinheit einen Eingangsventilator (65) in Strömungsverbindung mit dem Eingang (5) der Mediumzuführeinheit (4) aufweist.

14. Vorrichtung nach einem der Ansprüche 8-12, **dadurch gekennzeichnet, dass** die Mediumtransporteinheit einen Kolben (135) in Strömungsverbindung mit dem Eingang (5) der Mediumzuführeinheit (4) aufweist.

15. Vorrichtung nach einem der Ansprüche 8-14, **dadurch gekennzeichnet, dass** die Mediumtransporteinheit einen Saugventilator (68) in Strömungsverbindung mit der Ausgangsöffnung (3) der Mediumtransporteinheit aufweist.

16. Vorrichtung nach einem der Ansprüche 8-15, **dadurch gekennzeichnet, dass** die Beurteilungseinrichtung (10) ein Computer ist.

## Revendications

1. Procédé d'inspection des systèmes de passage de composants de machine avec des cavités, notamment produits moulés, culasses, pour l'inspection de la conductivité de flux appropriée, où le système de passage comprend au moins une ouverture d'entrée (2) menant à la surface du composant de machine, au moins une ouverture de sortie (3) menant à la surface du composant de machine, et au moins deux passages raccordés parallèles (A, B) raccordant l'ouverture d'entrée (2) et l'ouverture de sortie (3), **caractérisé en ce qu'**un premier milieu est introduit dans le système de passage au travers de l'ouverture d'entrée (2) du système de passage, puis, avec un changement rapide un second milieu avec des propriétés physiques différentes est introduit dans le système de passage, et au niveau de l'ouverture de sortie (3) du système de passage le changement dans le temps de la composition du milieu s'écoulant vers l'extérieur est déterminé, puis la fonction composition-temps obtenue de cette manière est comparée à la fonction composition-temps standard d'un composant de machine parfait.

2. Procédé selon la revendication 1, **caractérisé en ce que** dans le cas d'un mode de réalisation préférable du procédé selon l'invention le premier milieu est de l'air.

3. Procédé selon la revendication 2, **caractérisé en ce que** le second milieu est de l'air humide.

4. Procédé selon la revendication 2, **caractérisé en ce que** le second milieu est un gaz avec une densité différente de celle de l'air.

5. Procédé selon la revendication 2, **caractérisé en ce que** le second milieu est un gaz avec des propriétés optiques différentes de celles de l'air.

6. Procédé selon l'une quelconque des revendications 1 à 5, **caractérisé en ce que** plusieurs changements de milieu sont appliqués les uns après les autres.

7. Procédé selon la revendication 6, **caractérisé en ce que** le second milieu est introduit dans l'entrée sous la forme d'impulsions.

8. Dispositif pour l'inspection des systèmes de passage de composants de machine (1) avec des cavités, notamment produits moulés, culasses, pour l'inspection de la conductivité de flux appropriée, où le système de passage comprend au moins une ouverture d'entrée (2) menant à la surface du composant de machine (1), au moins une ouverture de sortie (3) menant à la surface du composant de machine, et au moins deux passages raccordés parallèles (A, B) raccordant l'ouverture d'entrée (2) et l'ouverture de sortie (3), et le dispositif présente une unité d'introduction de milieu (4) raccordée à l'ouverture d'entrée (2) du système de passage avec un raccordement étanche au gaz et une unité d'évaluation (8) raccordée à l'ouverture de sortie (3) du système de passage, et une unité de transport de milieu assurant le flux du milieu entre l'ouverture d'entrée (2) et l'ouverture de sortie (3) du système de passage, **caractérisé en ce que** l'unité d'introduction de milieu (4) présente une entrée (5) et une sortie (6), ainsi qu'un élément de commutation de milieu (7) entre l'entrée (5) et la sortie (6), l'élément de commutation de milieu (7) étant configuré pour changer le milieu introduit dans le système de passage entre un premier milieu et un second milieu avec des propriétés physiques différentes de celles du premier, et l'unité d'évaluation (8) comprend un dispositif de mesure (9) adapté pour déterminer la composition du milieu s'écoulant à travers celui-ci et un dispositif d'évaluation (10) en raccordement de communication de données avec lui, et configuré pour déterminer le changement dans le temps de la composition du milieu s'écoulant au travers du dispositif de mesure (9) et pour comparer la fonction composition-temps obtenue avec une fonction composition-temps standard d'un composant de machine parfait.

9. Dispositif selon la revendication 8, **caractérisé en ce que** l'élément de commutation de milieu (7) est un sélecteur de circuit télécommandé (67).

10. Dispositif selon la revendication 8, **caractérisé en ce que** l'élément de commutation de milieu (7) est un distributeur intermittent.

11. Dispositif selon l'une quelconque des revendications 8 à 10, **caractérisé en ce que** le dispositif de mesure (9) est un hydromètre à réaction rapide (69).

12. Dispositif selon l'une quelconque des revendications 8 à 10, **caractérisé en ce que** le dispositif de mesure (9) est un densimètre.

13. Dispositif selon l'une quelconque des revendications 8 à 12, **caractérisé en ce que** l'unité de transport de milieu présente un ventilateur d'entrée (65) en raccordement de flux avec l'entrée (5) de l'unité d'introduction de milieu (4).

14. Dispositif selon l'une quelconque des revendications 8 à 12, **caractérisé en ce que** l'unité de transport de milieu présente un piston (135) en raccordement de flux avec l'entrée (5) de l'unité d'introduction de milieu (4).

15. Dispositif selon l'une quelconque des revendications 8 à 14, **caractérisé en ce que** l'unité de transport de milieu présente un ventilateur d'aspiration (68) en raccordement de flux avec l'ouverture de sortie (3) de l'unité de transport de milieu.

16. Dispositif selon l'une quelconque des revendications 8 à 15, **caractérisé en ce que** le dispositif d'évaluation (10) est un ordinateur.
